(19) Europäisches Patentamt
European Patent Office
Office européen des brevets

(11) **EP 4 134 243 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **22186886.2**

(22) Anmeldetag: **26.07.2022**

(51) Internationale Patentklassifikation (IPC):
**B60B 1/06** *(2006.01)*   **B60B 3/14** *(2006.01)*
**B60B 3/16** *(2006.01)*

(52) Gemeinsame Patentklassifikation (CPC):
**B60B 1/06; B60B 3/147; B60B 3/16**

(54) **FELGENSYSTEM UND ANORDNUNG MIT EINEM FELGENSYSTEM**

RIM SYSTEM AND ASSEMBLY WITH A RIM SYSTEM

SYSTÈME DE JANTE ET AGENCEMENT DOTÉ D'UN SYSTÈME DE JANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **11.08.2021   DE 102021208800**

(43) Veröffentlichungstag der Anmeldung:
**15.02.2023   Patentblatt 2023/07**

(73) Patentinhaber: **Wohlfarth, Klaus
74427 Fichtenberg (DE)**

(72) Erfinder:
• **Wohlfarth, Klaus
74427 Fichtenberg (DE)**
• **Simonjan, Edgar
74541 Vellberg (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
**EP-B1- 0 641 677     WO-A1-94/04379
DE-C1- 4 312 438**

EP 4 134 243 B1

**Beschreibung**

Die Erfindung betrifft ein Felgensystem mit einer Felge, mit einer Adapterscheibe zur Montage an einer Radnabe eines Fahrzeugs, mit mehreren Radschrauben oder mehreren Radmuttern zum Befestigen der Felge an der Adapterscheibe, mit mehreren Schrauben oder mehreren Muttern zum Befestigen der Adapterscheibe an der Radnabe und mit einem Radnabenzentrierring zum Zentrieren der Adapterscheibe relativ zur Radnabe. Die Erfindung betrifft auch eine Anordnung mit einem erfindungsgemäßen Felgensystem und einer Radnabe eines Fahrzeugs.

Aus der europäischen Patentschrift EP 0 641 677 B1 ist ein Felgensystem mit einer Felge, mit einer Adapterscheibe zur Montage an einer Radnabe eines Fahrzeugs, mit mehreren Radschrauben zum Befestigen der Felge an der Adapterscheibe, mit mehreren Schrauben zum Befestigen der Adapterscheibe an der Radnabe und mit einem Radnabenzentrierring zum Zentrieren der Adapterscheibe relativ zur Radnabe bekannt, siehe dort Fig. 41.

Mit der Erfindung sollen ein Felgensystem und eine Anordnung mit einem Felgensystem verbessert werden.

Erfindungsgemäß ist hierzu ein Felgensystem mit den Merkmalen von Anspruch 1 sowie eine Anordnung mit den Merkmalen von Anspruch 15 vorgesehen. Vorteilhafte Weiterbildungen der Erfindung sind in den Unteransprüchen angegeben.

Bei einem Felgensystem mit einer Felge, mit einer Adapterscheibe zur Montage an einer Radnabe eines Fahrzeugs, mit mehreren Radschrauben oder mehreren Radmuttern zum Befestigen der Felge an der Adapterscheibe, mit mehreren Schrauben oder mehreren Muttern zum Befestigen der Adapterscheibe an der Radnabe und mit einem Radnabenzentrierring zum Zentrieren der Adapterscheibe relativ zur Radnabe ist vorgesehen, dass ein Felgenzentrierring zum Zentrieren der Felge relativ zur Adapterscheibe vorgesehen ist.

Der Felgenzentrierring bildet ein separates Bauteil und ist nicht einstückig mit der Adapterscheibe ausgeführt. Das Vorsehen eines Felgenzentrierrings erlaubt eine präzise Zentrierung der Felge relativ zur Adapterscheibe und damit mittelbar relativ zur Radnabe. Durch den Felgenzentrierring besteht die Möglichkeit, Toleranzen der Felge auszugleichen. Darüber hinaus erlaubt es das Vorsehen eines Felgenzentrierrings, die Adapterscheibe als einfache, im Wesentilchen eben Scheibe auszuführen. Dadurch können die Herstellungskosten für das erfindungsgemäße Felgensystem deutlich verringert werden. Das erfindungsgemäße Felgensystem ist auch dahingehend flexibel, dass unterschiedliche Felgen mittels unterschiedlicher Felgenzentrierringe zentriert werden können. Ein- und dieselbe Adapterscheibe kann somit mit verschiedenen Felgen verwendet werden. Der Radnabenzentrierring kann zur Anordnung zwischen der Adapterscheibe und der Radnabe vorgesehen sein. Der Radnabenzentrierring hat beispielsweise einen Zentrierabschnitt, der in radialer Richtung zwischen der Adapterscheibe und einem Außenumfang der Radnabe angeordnet ist. Der Felgenzentrierring ist zur Anordnung zwischen der Felge und der Adapterscheibe vorgesehen. Der Felgenzentrierring kann beispielsweise einen von der Felge aus vorragenden Abschnitt aufweisen, wobei dieser vorragende Abschnitt dann in einer Mittelbohrung der Adapterscheibe zentriert wird. Der Felgenzentrierring kann an der Felge oder an der Adapterscheibe befestigt sein. Der Felgenzentrierring und der Radnabenzentrierring können in einem einzigen, einstückigen Bauteil kombiniert sein, wobei dieses Bauteil separat zu der Adapterscheibe ausgebildet ist.

In Weiterbildung der Erfindung besteht der Felgenzentrierring aus Kunststoff.

Dies ermöglicht es, den Felgenzentrierring in hohen Stückzahlen kostengünstig herzustellen. Beispielsweise kann der Felgenzentrierring als Kunststoffspritzgussteil, insbesondere aus faserverstärktem Kunsttoff, ausgeführt werden. Der Felgenzentrierring erfüllt seine wesentliche mechanische Funktion lediglich beim Montieren der Felge, indem er eine exakte Zentrierung der Felge relativ zur Adapterscheibe ermöglicht. Während des Fahrbetriebs wird der Felgenzentrierring nicht belastet bzw. muss keine mechanische Haltefunktion erfüllen. Eine Ausbildung des Felgenzentrierrings aus Kunststoff erlaubt es beispielsweise, den Felgenzentrierring mit einem leichten Übermaß herzustellen, so dass der Felgenzentrierring spielfrei an der Adapterscheibe zentriert wird und sich dabei gegebenenfalls leicht deformiert.

In Weiterbildung der Erfindung weist eine Zentrierfläche des Felgenzentrierrings mehrere Noppen oder Vorsprünge auf.

Solche Noppen oder Vorsprünge ragen aus der Zentrierfläche heraus und können beim Zentrieren abschnittsweise plattgedrückt bzw. deformiert werden. Dadurch können Toleranzen ausgeglichen werden. Die Noppen oder Vorsprünge bilden Abschnitte der Zentrierfläche mit einem Übermaß. Beim Ansetzen der Felge mit dem Felgenzentrierring an die Adapterscheibe werden diese Vorsprünge in der Regel unterschiedlich stark deformiert und können dadurch Toleranzen bei den Abmessungen der Adapterscheibe ausgleichen. In gleicher Weise kann der Felgenzentrierring auf diese Weise auch Toleranzen der Felge ausgleichen. Die Noppen oder Vorsprünge ragen beispielsweise 0,15mm bis 0,2mm über die Zentrierfläche hinaus. Die Noppen oder Vorsprünge können beispielsweise einen Durchmesser beziehungsweise eine Breite von 0,3mm bis 0,4mm aufweisen. Die Vorsprünge könne beispielsweise eine Länge von 0,5mm bis 1,5mm aufweisen. Die Vorsprünge können sich lediglich über einen Teil der Länge der Zentrierfläche erstrecken.

In Weiterbildung der Erfindung ist eine Zentrierfläche des Felgenzentrierrings leicht konisch ausgebildet.

Die Zentrierfläche des Felgenzentrierrings kann sich in Richtung von der Felge weg, wenn der Felgenzentrierring an der Felge angeordnet ist, verjüngen. Dadurch kann der Felgenzentrierring leicht an die Mittelöffnung der Adapterscheibe angesetzt werden und durch Einschieben der Zentrierfläche in die Mittelöffnung der Adapterscheibe zentriert sich der Felgenzentrierring zusammen mit der Felge dann selbsttätig relativ zur Adapterscheibe. Eine Konizität der Zentrierfläche beträgt beispielsweise nur wenige zehntel Millimeter, beispielsweise $^{1}/_{10}mm$ bis $^{3}/_{10}mm$.

In Weiterbildung der Erfindung ist der Felgenzentrierring mit Rastmitteln an der Felge befestigt.

Auf diese Weise kann der Felgenzentrierring sicher und spielfrei in einer Mittelbohrung der Felge befestigt werden.

In Weiterbildung der Erfindung weist der Felgenzentrierring wenigstens zwei Rastnasen auf und die Felge weist in einer Mittelöffnung eine umlaufende Nut auf, wobei die wenigstens zwei Rastnasen zum Einrasten in die umlaufende Nut vorgesehen sind.

Die Rastverbindung zwischen den Rastnasen und der Nut rastet durch einfaches Einschieben des Felgenzentrierrings in die Mittelöffnung der Felge ein. Die Rastverbindung kann beispielsweise werkzeuglos durch kräftigen Druck wieder geöffnet werden.

In Weiterbildung der Erfindung ist eine Zentrierfläche des Felgenzentrierrings zum Zusammenwirken mit einem Innenumfang einer Mittelöffnung der Adapterscheibe ausgebildet.

Auf diese Weise wird für die Anordnung der Zentrierfläche im montierten Zustand des Felgensystems nur wenig Platz benötigt. Indem die Zentrierfläche an einem Innenumfang einer Mittelöffnung der Adapterscheibe angreift, steht auf der Adapterscheibe mehr Platz für die Anordnung der Radschrauben und der Schrauben zur Verbindung mit der Radnabe zur Verfügung.

In Weiterbildung der Erfindung weist die Adapterscheibe mehrere Gewindebuchsen zum Eindrehen der Radschrauben oder mehrere Schraubbolzeneinsätze zum Aufschrauben der Radmuttern auf.

Indem die Adapterscheibe mit Gewindebuchsen oder Schraubbolzeneinsätzen versehen wird, können die Gewindebuchsen oder Schraubbolzeneinsätze in hohen Stückzahlen aus hochbelastbarem Material, beispielsweise Stahl oder Titan, hergestellt werden. Die Adapterscheibe kann hingegen aus leichtem, weniger belastbaren Material, beispielsweise Aluminium, bestehen.

In Weiterbildung der Erfindung weist die Adapterscheibe auf ihrer, der Felge zugewandten Oberfläche wenigstens einen Vorsprung auf, wobei der Vorsprung zum Eingreifen in eine passende Ausnehmung in der Felge vorgesehen ist.

Ein solcher Vorsprung kann eine lagerichtige Montage der Felge an der Adapterscheibe erleichtern, so dass dann die Radschrauben bereits in der korrekten Position in die Felge bzw. die Gewindebuchsen oder Gewindebohrungen des Adapters eingesteckt werden können. Ein solcher Vorsprung kann aber auch im Fahrbetrieb vorteilhaft sein, um bei hohem auf die Felge wirkendem Drehmoment eine Verdrehung der Felge relativ zur Adapterscheibe zu verhindern.

In Weiterbildung der Erfindung weisen die Gewindebuchsen einen über die der Felge zugewandte Oberfläche der Adapterscheibe hinausragenden Bund auf, wobei der Bund den Vorsprung zum Eingreifen in eine passende Ausnehmung der Felge bildet.

Ein Bund der Gewindebuchsen kann die lagerichtige Montage der Felge erleichtern und kann darüber hinaus auch zum Aufnehmen von Drehmoment dienen, so dass bei sehr hohem, zwischen der Adapterscheibe und der Felge wirkendem Drehmoment eine relative Verdrehung von Felge und Adapterscheibe zuverlässig verhindert wird. Die Ausnehmung kann mittels einer Durchgangsöffnung in der Felge zum Durchstecken einer Radschraube gebildet sein.

In Weiterbildung der Erfindung weist der Radnabenzentrierring eine Zentrierfläche auf, die zum Zusammenwirken mit einem Außenumfang der Radnabe ausgebildet ist.

In Weiterbildung der Erfindung weist die Zentrierfläche des Radnabenzentrierrings mehrere Noppen oder Vorsprünge auf.

Die Noppen oder Vorsprünge am Radnabenzentrierring können gleich ausgebildet sein wie am Felgenzentrierring.

In Weiterbildung der Erfindung ist die Zentrierfläche des Radnabenzentrierrings leicht konisch.

Die Konizität der Zentrierfläche des Radnabenzentrierrings kann gleich groß sein wie die Konizität der Zentrierfläche des Felgenzentrierrings.

In Weiterbildung der Erfindung weist der Radnabenzentrierring Rastmittel zum Befestigen des Radnabenzentrierrings an der Adapterscheibe auf.

Die Rastmittel können beispielsweise werkzeuglos eingerastet und auch wieder gelöst werden.

In Weiterbildung der Erfindung ist ein Satz mit mehreren Adapterscheiben vorgesehen, wobei die Adapterscheiben des Satzes eine unterschiedliche Dicke und/oder unterschiedliche Lochkreise zur Verbindung mit der Radnabe aufweisen.

Auf diese Weise können beispielsweise unterschiedliche Spurweiten beziehungsweise Spurverbreiterungen erzielt werden, indem Adapterscheiben mit unterschiedlicher Dicke eingesetzt werden. Die Adapterscheiben ermöglichen vor allem die Anpassung an unterschiedliche Lochkreise der Radnabe. Ein- und dieselbe Felge kann dadurch mittels Zwischenfügen unterschiedlicher Adapterringe an Fahrzeugen unterschiedlicher Hersteller mit unterschiedlichen Lochkreisen montiert werden.

In Weiterbildung der Erfindung ist ein Satz mit mehreren Radnabenzentrierringen vorgesehen, wobei die Radnabenzentrierringe des Satzes einen unterschiedlichen Durchmesser der Zentrierfläche aufweisen.

Neben unterschiedlichen Lochkreisen verwenden unterschiedliche Fahrzeughersteller in der Regel auch unterschiedliche Durchmesser der Radnaben, insbesondere Außendurchmesser der Radnaben, die bei Serienfahrzeugen zum Zentrieren der Felge auf der Radnabe vorgesehen sind. Dieser Außendurchmesser der Radnaben kann sich sogar zwischen Fahrzeugen ein- und desselben Herstellers unterscheiden, wie auch die Lochkreise. Ein Satz mit mehreren Radnabenzentrierringen, wobei die Radnabenzentrierringe des Satzes einen unterschiedlichen Durchmesser der Zentrierfläche aufweisen, ermöglicht es, ein- und dieselbe Felge, gegebenenfalls unter Zwischenfügen unterschiedlicher Adapterscheiben sowie Radnabenzentrierringen, an unterschiedlichen Fahrzeugen zu montieren.

In Weiterbildung der Erfindung ist ein Satz mit mehreren Felgenzentrierringen vorgesehen, wobei die Felgenzentrierringe des Satzes zum Zentrieren unterschiedlich ausgebildeter Felgen ausgebildet sind.

Das der Erfindung zugrunde liegende Problem wird auch durch eine Anordnung mit einem erfindungsgemäßen Felgensystem und einer Radnabe eines Fahrzeugs gelöst, wobei die Adapterscheibe mit mehreren Schrauben oder mehreren Muttern an der Radnabe befestigt ist, wobei ein Radnabenzentrierring zum Zentrieren der Adapterscheibe relativ zur Radnabe vorgesehen ist, wobei die Felge mit mehreren Radschrauben oder mehreren Radmuttern an der Adapterscheibe befestigt ist und wobei ein Felgenzentrierring zum Zentrieren der Felge relativ zur Adapterscheibe vorgesehen ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten und beschriebenen Ausführungsformen lassen sich dabei in beliebiger Weise kombinieren, ohne den Rahmen der Erfindung zu überschreiten. Dies gilt auch für die Kombination von Einzelmerkmalen ohne weitere Merkmale, mit denen sie im Zusammenhang dargestellt sind. In den Zeichnungen zeigen:

Fig. 1      eine auseinandergezogene Darstellung einer erfindungsgemäßen Anordnung mit einem erfindungsgemäßen Felgensystem,

Fig. 2      eine Schnittansicht des Felgensystems der Fig. 1 in einer anderen auseinandergezogenen Darstellung,

Fig. 3      eine abschnittsweise Schnittansicht der Felge des Felgensystems der Fig. 1,

Fig. 4      den Felgenzentrierring des Felgensystems der Fig. 1,

Fig. 5      die an einer Radnabe montierte Adapterscheibe des Felgensystems der Fig. 1,

Fig. 6      eine Schnittansicht der Adapterscheibe des Felgensystems der Fig. 1,

Fig. 7      eine Gewindebuchse der Adapterscheibe des Felgensystems der Fig. 1,

Fig. 8      einen Radnabenzentrierring des Felgensystems der Fig. 1,

Fig. 9      eine Schnittansicht einer Anordnung mit dem Felgensystem der Fig. 1 im montierten Zustand,

Fig. 10      eine abschnittsweise Vergrößerung der Schnittansicht der Fig. 9,

Fig. 11      mehrere unterschiedliche Adapterscheiben des erfindungsgemäßen Felgensystems und

Fig. 12      mehrere unterschiedliche Radnabenzentrierringe des erfindungsgemäßen Felgensystems.

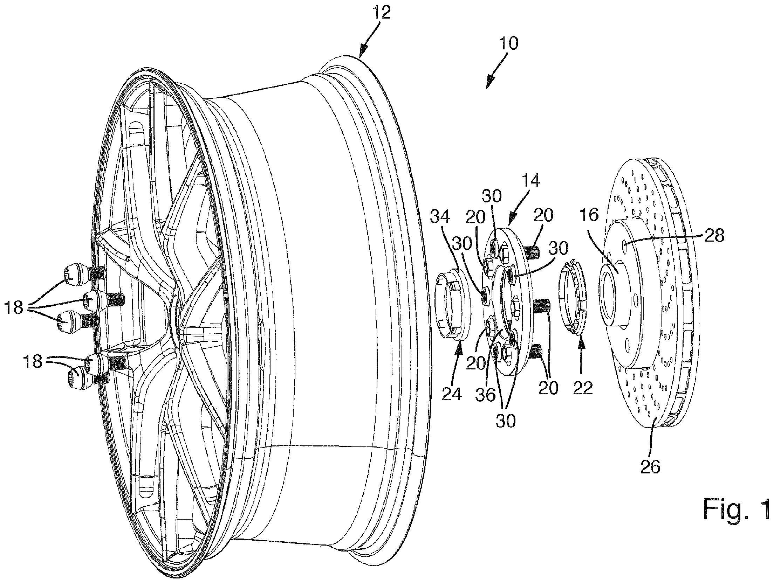

Fig. 1 zeigt eine Anordnung mit einem erfindungsgemäßen Felgensystem 10 mit einer Felge 12 und einer Adapterscheibe 14, die zur Montage an einer Radnabe 16 vorgesehen ist. Zur Befestigung der Felge 12 an der Adapterscheibe 14 sind insgesamt fünf Radschrauben 18 vorgesehen. Zur Befestigung der Adapterscheibe 14 in Gewindebohrungen der Radnabe 16 sind insgesamt fünf Schrauben 20 vorgesehen. Zum Zentrieren der Adapterscheibe 14 relativ zur Radnabe 16 ist ein Radnabenzentrierring 22 vorgesehen. Zum Zentrieren der Felge 12 relativ zur Adapterscheibe 14 ist ein Felgenzentrierring 24 vorgesehen. An der Radnabe 16 ist eine Bremsscheibe 26 vorgesehen, die im Rahmen der Erfindung entfallen kann oder beispielsweise auch durch eine Bremstrommel ersetzt werden kann. Die Bremsscheibe 26 überdeckt in der Darstellung der Fig. 1 die Gewindebohrungen der Radnabe 16.

Zur Montage des Felgensystems 10 an der Radnabe 16 wird zunächst der Radnabenzentrierring 22 in die Mittelöffnung der Adapterscheibe 14 eingerastet. Die Adapterscheibe 14 wird dann auf die Radnabe 16 aufgeschoben. Dabei wird der Radnabenzentrierring 22 zwischen dem Außenumfang der Radnabe 16 und der Adapterscheibe 14 angeordnet und sorgt damit für eine exakte Zentrierung der Adapterscheibe 14 relativ zur Radnabe 16. Die Adapterscheibe 14 wird in diesem zentrierten Zustand mittels der Schraube 20 an der Radnabe befestigt. Die Schrauben 20 werden hierzu durch Durchgangsöffnungen 28 in der Bremsscheibe 26 gesteckt und dann in Gewindebohrungen der Radnabe 16 eingeschraubt, die in Fig. 1 verdeckt sind. Nach dem Befestigen der Adapterscheibe wird die Felge 12 auf der Adapterscheibe 14 angeordnet, wobei ein Felgenzentrierring 24 an der Felge 12 befestigt ist und in eine Mittelöffnung der Adapterscheibe 14 eingeschoben wird, um die Felge 12 relativ zur Adapterscheibe 14 zu zentrieren, und die Felge 12 wird dann mittels der Radschrauben 18 an der Adapterscheibe 14 befestigt. Die Adapterscheibe 14 ist mit insgesamt fünf Gewindebuchsen 30 versehen, in die die Radschrauben 18 eingeschraubt werden können. Die Gewindebuchsen 30 weisen einen umlaufenden Bund auf, der über die Oberfläche der Adapterscheibe 14 hinausragt, die der Felge 12 zugewandt ist. Die Gewindebuchsen 30 greifen mit ihrem Bund in Ausnehmungen der Felge auf der, der Adapterscheibe 14 zugewandten Seite der Felge ein, wobei diese Ausnehmungen in Fig. 1 nicht erkennbar sind. Die Felge kann dadurch in sehr einfacher Weise relativ zur Adapterscheibe in Drehrichtung positioniert werden. Der Bund der Gewindebuchsen 30 sorgt im Zusammenspiel mit den Ausnehmungen in der Felge 12 auch für eine zuverlässige Drehmomentübertragung zwischen der Felge 12 und der Adapterscheibe 14. Die Adapterscheibe 14 ist durch die Schrauben 20 drehfest mit der Radnabe 16 verbunden.

Der Felgenzentrierring 24 wird in eine Mittelöffnung der Felge 12 eingeklipst, die in Fig. 1 verdeckt ist. Der Felgenzentrierring 24 greift mit einer Zentrierfläche 34 dann am Innenumfang 36 der Mittelöffnung der Adapterscheibe 14 an und sorgt dadurch für eine exakte Zentrierung der Felge 12 zur Adapterscheibe 14. Da die Adapterscheibe 14 bereits mittels des Radnabenzentrierrings 22 exakt zum Außenumfang der Radnabe 16 zentriert ist, kann der Felgenzentrierring 24 dafür sorgen, dass die Felge 12 exakt zur Radnabe 16 zentriert ist. Nachdem die Zentrierfläche 34 an der Adapterscheibe 14 anliegt und die Felge 12 zur Adapterscheibe 14 exakt zentriert ist, werden die Radschrauben 18 in die Gewindebuchsen 30 eingeschraubt, um die Felge 12 sicher an der Adapterscheibe 14 und damit mittelbar auch an der Radnabe 16 zu befestigen.

Das erfindungsgemäße Felgensystem 10 hat erhebliche Vorteile gegenüber konventionellen Felgen, da mittels der Adapterscheibe 14 und dem Radnabenzentrierring 22 eine Anpassung an unterschiedliche Außenumfänge und Lochkreise von Radnaben 16 vorgenommen werden kann. Fahrzeuge unterschiedlicher Hersteller und auch unterschiedliche Fahrzeuge ein- und desselben Herstellers können unterschiedliche Radnaben 16 aufweisen. Diese Unterschiede betreffen dabei nicht nur den Lochkreis, also den Kreisradius, auf dem die Gewindebohrungen in der Radnabe 16 angeordnet sind, sondern auch den Außenumfang der Radnabe 16, der zum Zentrieren der Adapterscheibe 14 bzw. auch zum Zentrieren von Felgen dient. Das erfindungsgemäße Felgensystem 10 ist dadurch äußerst flexibel einsetzbar und die Felge 12 kann mittels unterschiedlicher Adapterscheiben 14 und unterschiedlicher Radnabenzentrierringe 22 an Radnaben 16 mit unterschiedlichem Lochkreis und unterschiedlichem Außenumfang einer Zentrierfläche der Radnabe 16 befestigt werden.

Darüber hinaus sorgt der Felgenzentrierring 24 für eine exakte Zentrierung der Felge 12 zur Adapterscheibe 14. Damit wird das Problem konventioneller Felgensysteme gelöst, dass eine Zentrierung der Felge 12 zur Adapterscheibe 14 und damit letztendlich zur Radnabe 16 nicht ausreichend präzise vorgenommen werden kann. Wie bereits in Fig. 1 zu erkennen ist, greift die Zentrierfläche 34 des Felgenzentrierrings 24 am Innenumfang 36 der Mittelbohrung der Adapterscheibe 14 an. Dadurch wird Platz gespart und die beiden Oberflächen der Adapterscheibe 14 können vollständig zur Anordnung der Gewindebuchsen 30 sowie zur Anordnung der Köpfe der Schrauben 20 genutzt werden.

Das Vorsehen von Gewindebuchsen 30 in der Adapterscheibe 14 ermöglicht es, die Adapterscheibe 14 selbst aus sehr leichtem Material, beispielsweise Aluminium oder eine Aluminiumlegierung, herzustellen. Die Gewindebuchsen 30 können aus Stahl oder einem anderen, hochfesten leichten Material, beispielsweise Titan, gefertigt werden und in die Adapterscheibe 14 eingepresst werden. Auch die Schrauben 20 sowie die Radschrauben 18 können aus sehr leichtem und hochfestem Material, beispielsweise Titan, gefertigt werden. Dadurch kann eine sehr stabile Verbindung zwischen der Felge 12 und der Radnabe 16 bereitgestellt werden und gleichzeitig können die ungefederten Massen an der Radaufhängung eines Fahrzeugs verringert werden.

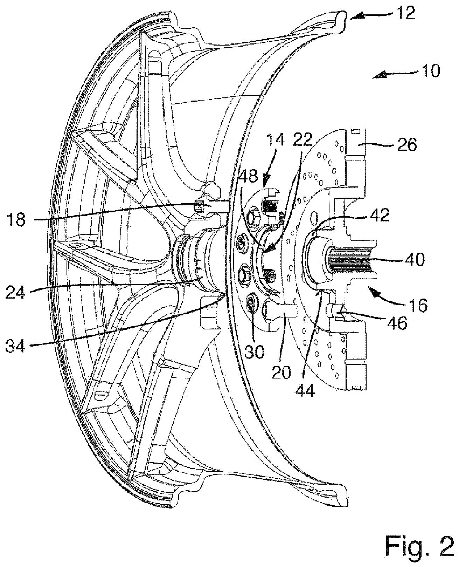

Fig. 2 zeigt eine geschnittene Ansicht der Anordnung der Fig. 1 in einer auseinandergezogenen Darstellung und aus einem etwas anderen Blickwinkel. In dieser Ansicht ist der Aufbau der Radnabe 16 genauer zu erkennen. Die Radnabe 16 weist eine Mittelbohrung mit einer Innenverzahnung 40 auf. Die Innenverzahnung 40 kann auf eine Außenverzahnung einer nicht gezeigten Antriebswelle, beispielsweise einer Halbwelle, die vom Differential ausgeht, aufgeschoben werden. Die Innenverzahnung 40 kann selbstverständlich auch mit der Abtriebswelle eines Elektromotors verbunden werden. Die Mittelbohrung der Radnabe und die Innenverzahnung 14 können im Rahmen der Erfindung selbstverständlich auch entfallen, beispielsweise wenn ein nicht angetriebenes Rad vorliegt. Die Radnabe 16 weist einen ringförmigen Vorsprung 42 auf, dessen Außenumfang 44 eine Zentrierfläche für eine konventionelle Felge oder für die Adapterscheibe 14 des erfindungsgemäßen Felgensystems 10 bietet. In Fig. 2 ist auch eine der Gewindebohrungen 46 der Radnabe 16 zu erkennen, in die die Schrauben 20 eingeschraubt werden, die dann die Adapterscheibe 14 an der Radnabe 16 befestigen.

Anstelle der Schrauben 20 und der Gewindebohrungen 46 kann die Radnabe 16 auch Schraubbolzen aufweisen, auf die dann die Adapterscheibe 14 aufgeschoben und dann mit passenden Muttern an der Radnabe 16 befestigt wird.

Im Rahmen der Erfindung kann auch die Adapterscheibe 14 ihrerseits anstelle der Gewindebuchsen 30 mit Schraubbolzen versehen sein, die dann durch Durchgangsöffnungen der Felge 12 gesteckt werden, so dass die Felge 12 dann anstelle mittels der Radschrauben 18 mit passenden Muttern an den Schraubbolzen der Adapterscheibe 14 befestigt wird.

In Fig. 2 zu erkennen ist eine innenliegende Zentrierfläche des Radnabenzentrierrings 22 an der Adapterscheibe 14. Der Radnabenzentrierring 22 ist in der Darstellung der Fig. 2 bereits in die Mittelöffnung der Adapterscheibe 14 eingerastet. Die Zentrierfläche des Radnabenzentrierrings 22 ist leicht konisch ausgebildet und öffnet sich in Richtung auf die Radnabe 16. Darüber hinaus ist die Zentrierfläche mit mehreren leistenartigen Vorsprüngen 48 versehen, von denen in Fig. 2 lediglich zwei erkennbar sind. Diese Vorsprünge 48 ragen geringfügig über die Zentrierfläche hinaus und sind zum Ausgleich von Toleranzen des Außenumfangs 44 der Radnabe 16 vorgesehen. Liegt der Außenumfang 44 über dem Sollmaß, so werden die Vorsprünge 48 beim Aufschieben des Radnabenzentrierrings 22 zusammen mit der Adapterscheibe 14 komprimiert und gegebenenfalls plastisch verformt. Dadurch wird ein spielfreier Sitz der Adapterscheibe 14 auf dem Außenumfang 44 der Radnabe 16 erzielt. Liegt der Außenumfang 44 der Radnabe 16 auf dem Sollmaß oder gegebenenfalls sogar leicht unter dem Sollmaß, liegen lediglich die Vorsprünge 48 am Außenumfang 44 an und können dadurch immer noch für eine spielfreie Zentrierung der Adapterscheibe 14 relativ zur Radnabe 16 sorgen.

In der Darstellung der Fig. 2 ist der Felgenzentrierring 24 ebenfalls in einer Position gezeigt, in der er in die Mittelbohrung der Felge 12 eingerastet ist. Die Zentrierfläche 34 des Felgenzentrierrings 24 ragt in Richtung auf die Adapterscheibe 14 vor. Beim Aufsetzen der Felge 12 auf die Adapterscheibe 14 gelangt die Zentrierfläche 34 des Felgenzentrierrings 24 in Anlage an den Innenumfang der Mittelbohrung der Adapterscheibe 14 und kann dadurch für eine exakte Zentrierung der Felge 12 relativ zur Adapterscheibe 14 sorgen. Die Zentrierfläche 34 ist ebenfalls mit leistenartigen Vorsprüngen versehen, die in Fig. 2 nicht erkennbar sind, und die auch bei toleranzbehafteter Mittelbohrung der Adapterscheibe 14 für eine spielfreie Zentrierung der Felge 12 relativ zur Adapterscheibe 14 sorgen können. Die Zentrierfläche 34 ist leicht konisch ausgebildet und verjüngt sich ausgehend von der Felge 12 in Richtung auf die Adapterscheibe 14. Dadurch kann die Zentrierfläche 34 des Felgenzentrierrings 24 in sehr einfacher Weise in die Mittelöffnung der Adapterscheibe 14 eingeführt werden.

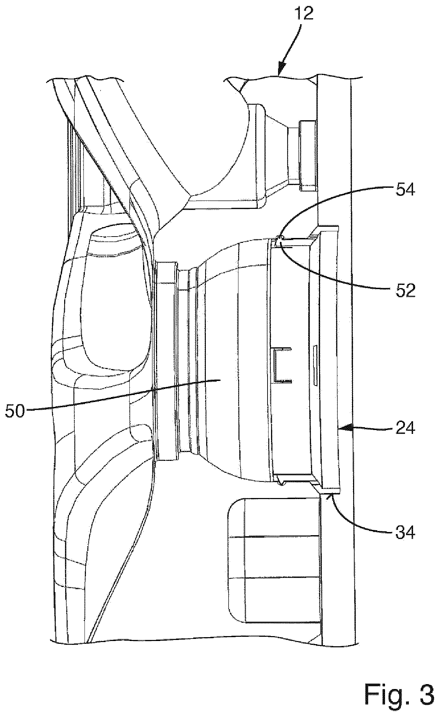

Die Darstellung der Fig. 3 zeigt eine abschnittsweise vergrößerte Schnittansicht der Felge 12 mit dem Felgenzentrierring 24. Zu erkennen ist die außen liegende Zentrierfläche 34 des Felgenzentrierrings 24. Die konische Ausbildung der Zentrierfläche 34 ist in Fig. 3 nicht zu erkennen, da sie sehr schwach ausgebildet ist und sich die Zentrierfläche 34 von der Felge 12 weg gesehen nur wenige Zehntel Millimeter, beispielsweise $1/10$mm bis $2/10$mm , verjüngt . Im Rahmen der Erfindung muss die Zentrierfläche 34 nicht notwendigerweise konisch ausgebildet sein.

Der Felgenzentrierring 24 weist an seinem, in die Mittelöffnung 50 der Felge 12 eingeschobenen Ende einen umlaufenden Bund mit insgesamt vier Rastnasen 52 auf, von denen in Fig. 3 lediglich drei erkennbar sind. Diese Rastnasen 52 schnappen in eine umlaufende Nut 54 in der Mittelöffnung 50 der Felge 12 ein und sichern dadurch den Felgenzentrierring 24 spielfrei in der Mittelöffnung 50.

Der Felgenzentrierring 24 ist vorteilhafterweise aus Kunststoff hergestellt. Hierbei kann faserverstärkter Kunststoff gewählt werden. Vorteilhafterweise wird der Felgenzentrierring als Kunststoffspritzgussteil hergestellt.

Auch der Radnabenzentrierring 22 ist vorteilhafterweise als Kunststoffteil, insbesondere als Kunststoffspritzgussteil, hergestellt.

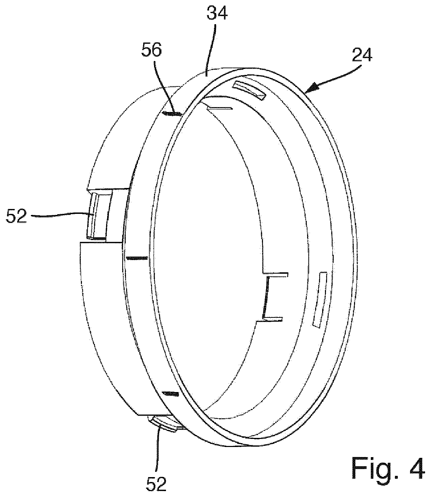

Fig. 4 zeigt den Felgenzentrierring 24 in einer Ansicht von schräg vorne. Zu erkennen ist die umlaufende Zentrierfläche 34, die mit mehreren, in axialer Richtung verlaufenden leistenartigen Vorsprüngen 56 versehen ist. Die leistenartigen Vorsprünge 56 dienen, wie erläutert, dazu, die Felge 12 spielfrei relativ zur Adapterscheibe 14 zentrieren zu können. Weist die Mittelöffnung der Adapterscheibe 14 einen kleineren Durchmesser als den Solldurchmesser auf, werden die leistenartigen Vorsprünge 56 komprimiert und gegebenenfalls plastisch verformt. Weist die Mittelöffnung der Adapterscheibe 14 ihren Solldurchmesser auf oder sogar einen Durchmesser, der etwas über dem Solldurchmesser liegt, liegen die Vorsprünge 56 am Innenumfang der Mittelöffnung an und sorgen dadurch für eine spielfreie Zentrierung der Felge 12 relativ zur Adapterscheibe 14.

Gut zu erkennen sind in Fig. 4 auch die Rastnasen 52 des Felgenzentrierrings 24, die an federnden Rastarmen angeordnet sind. Der Felgenzentrierring 24 ist einstückig ausgeführt und beim Einschieben in die Mittelöffnung 50 der Felge 12, siehe Fig. 3, werden die Rastnasen 52 zunächst radial nach innen ausgelenkt, bis sie auf Höhe der umlaufenden Nut 54 in der Mittelöffnung 50 der Felge 12 angelangt sind. Dann schnappen die Rastnasen 52 nach außen und greifen in die umlaufende Nut 54 ein. Dadurch ist der Felgenzentrierring 24 dann an der Felge 12 gesichert.

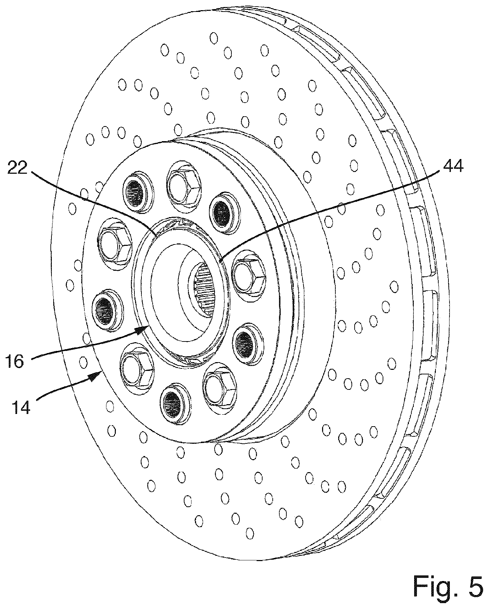

Fig. 5 zeigt eine vergrößerte Darstellung der Radnabe 16 mit daran befestigter Adapterscheibe 14. In dieser Ansicht zu erkennen ist, wie der Radnabenzentrierring 22 zwischen dem Innenumfang der Mittelöffnung der Adapterscheibe 14 und dem Außenumfang 44 der Radnabe 16 angeordnet ist und dadurch für eine spielfreie Zentrierung der Adapterscheibe 14 relativ zur Radnabe 16 sorgt.

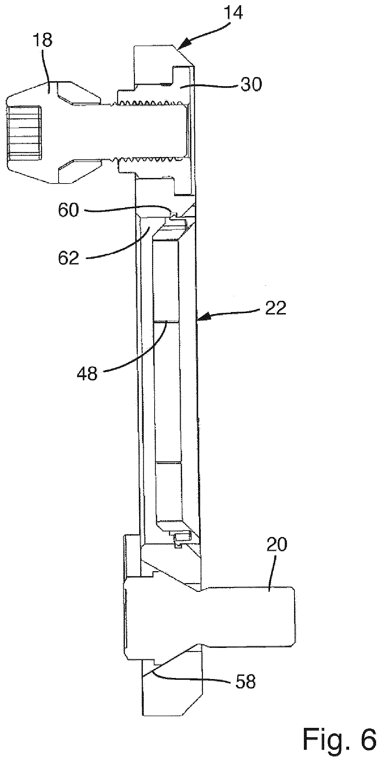

Fig. 6 zeigt eine Schnittansicht der Adapterscheibe 14. In passend ausgebildete Durchgangsöffnungen der Adapterscheibe 14 sind Gewindebuchsen 30 eingepresst, in die dann die Radschrauben 18 eingeschraubt werden. Die Gewindebuchsen 30 sind drehfest in die Adapterscheibe 14 eingepresst.

Die Adapterscheibe 14 weist Durchgangsöffnungen 58 zum Durchstecken der Schrauben 20 auf. Die Durchgangsöffnungen weisen einen kegelförmigen Anlageabschnitt und einen zylindrischen Durchgangsabschnitt auf. Die Schrauben 20 weisen einen kegelförmigen Anlagebund auf, der in dem kegelförmigen Abschnitt der Durchgangsöffnungen 58 liegt.

Der Radnabenzentrierring 22 ist in die Mittelöffnung der Adapterscheibe 14 eingeschoben und mittels mehrerer Rastnasen in einer umlaufenden Nut 60 in der Mittelöffnung der Adapterscheibe 14 verrastet. Die Zentrierfläche des Radnabenzentrierrings 22 liegt innerhalb der Mittelöffnung der Adapterscheibe 14. Dadurch wird eine äußerst platzsparende Anordnung erreicht. In Fig. 6 zu erkennen sind die Vorsprünge 48 auf der Zentrierfläche des Radnabenzentrierrings 22.

Es ist in Fig. 6 zu erkennen, dass der Radnabenzentrierring 22 zum einen nicht über die in Fig. 6 rechts angeordnete Oberfläche der Adapterscheibe 14 hinausragt und zum anderen nur bis zu etwas mehr als der Hälfte der axialen Länge der Mittelöffnung der Adapterscheibe 14 in diese hineinragt. Ausgehend von der in Fig. 6 links dargestellten Oberfläche der Adapterscheibe 14, die im montierten Zustand der Felge zugewandt ist, ist ein Abschnitt des Innenumfangs der Mittelöffnung der Adapterscheibe 14 noch frei und radial innerhalb des Innenumfangs der Mittelöffnung ist noch freier Raum 62 vorhanden, in den dann der Felgenzentrierring 24 abschnittsweise eingeschoben werden kann. Speziell wird die Zentrierfläche 34 des Felgenzentrierrings 24 in diesen freien Raum 62 eingeschoben und liegt dann an dem Innenumfang der Mittelöffnung der Adapterscheibe 14 an. Dadurch wird eine in axialer Richtung äußerst platzsparende Anordnung erreicht.

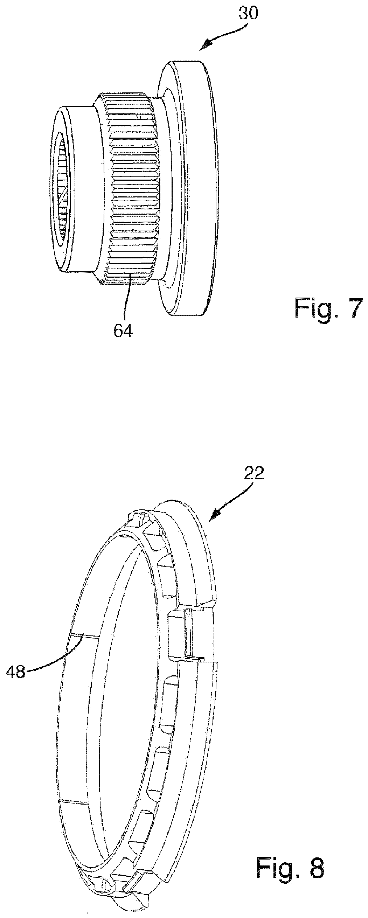

Fig. 7 zeigt eine der Gewindebuchsen 30, die in die Adapterscheibe 14 eingepresst werden, siehe Fig. 6. Die Gewindebuchse 30 weist eine umlaufende Verzahnung 64 auf, wobei die einzelnen Zähne der Verzahnung 64 in axialer Richtung verlaufen. Die Gewindebuchse 30 kann dadurch in axialer Richtung in eine passende Durchgangsöffnung der Adapterscheibe 14 eingepresst werden. Die Gewindebuchse 30 sitzt dann drehfest in der Adapterscheibe 14. Die Gewindebuchse 30 kann aus Stahl, beispielsweise aber auch aus Titan, hergestellt werden, um einerseits hochfest und andererseits sehr leicht ausgebildet zu sein.

Fig. 8 zeigt den Radnabenzentrierring 22 von schräg vorne. Zu erkennen sind die Rastnasen am Radnabenzentrierring 22 sowie mehrere Vorsprünge 48 auf der Zentrierfläche des Radnabenzentrierrings 22, die dann auf den Außenumfang 44 der Radnabe 16 aufgeschoben wird.

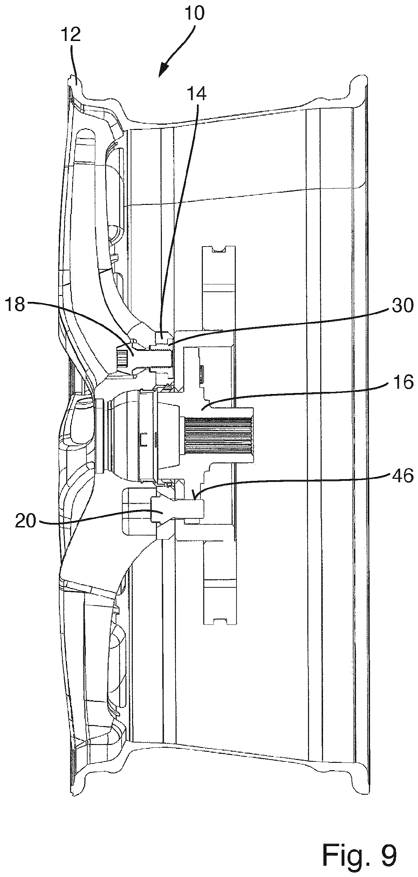

Fig. 9 zeigt eine Schnittansicht einer Anordnung mit dem erfindungsgemäßen Felgensystem 10 der Fig. 1 und der Radnabe 16. Die Schnittebene geht einerseits durch eine der Radschrauben 18, mit denen die Felge 12 an der Adapterscheibe 14 befestigt ist. Die Schnittebene verläuft auch durch eine der Schrauben 20, die zur Befestigung der Adapterscheibe 14 in Gewindebohrungen 46 der Radnabe 16 eingreifen.

In Fig. 9 ist auch gut zu erkennen, wie der über die Oberfläche der Adapterscheibe 14, die der Felge 12 zugewandt ist, hinausragende Bund der Gewindebuchse 30 in eine passende Ausnehmung in der Felge 12 eingreift. Dadurch kann die Felge 12 zum einen beim Aufsetzen auf die Adapterscheibe 14 exakt vorpositioniert werden, so dass die Radschrauben 18 problemlos eingeschraubt werden können. Darüber hinaus kann über diesen vorragenden Bund auch Drehmoment von der Felge 12 auf die Adapterscheibe 14 und letztendlich auf die Radnabe 16 oder umgekehrt übertragen werden. Bei sehr drehmomentstarken Fahrzeugen sorgt dieser Eingriff des Bunds der Gewindebuchse 30 in eine passende Ausnehmung der Felge 12 für eine sichere und drehmomentfeste Befestigung der Felge 12 an der Adapterscheibe 14 und damit der Radnabe 16.

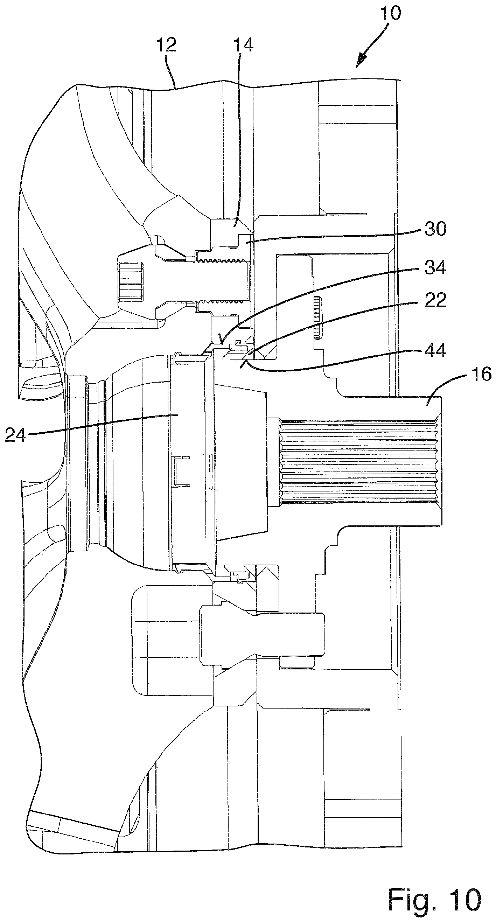

Fig. 10 zeigt einen vergrößerten Ausschnitt der Ansicht der Fig. 9. In dieser Ansicht ist gut zu erkennen, dass die Zentrierfläche 34 des Felgenzentrierrings 24 spielfrei am Innenumfang der Mittelöffnung der Adapterscheibe 14 anliegt und dadurch für eine exakte, spielfreie Zentrierung der Felge 12 relativ zur Adapterscheibe 14 sorgt.

Weiter ist in Fig. 10 zu erkennen, dass der Radnabenzentrierring 22 für eine spielfreie Zentrierung der Adapterscheibe 14 relativ zum Außenumfang 44 der Radnabe 16 sorgt. Die Felge 12 ist mittels des erfindungsgemäßen Felgensystems 10 damit spielfrei relativ zur Radnabe 16 zentriert.

Weiter ist in Fig. 10 zu erkennen, wie der umlaufende Bund der Gewindebuchse 30 in die passende Ausnehmung der Felge 12 eingreift.

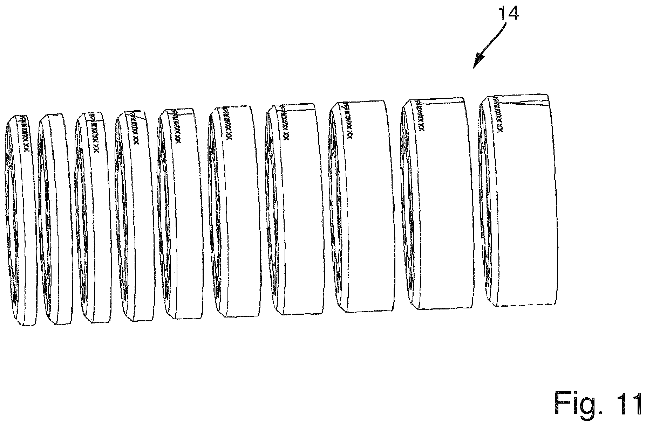

Fig. 11 zeigt einen Satz mit mehreren Adapterscheiben 14 des erfindungsgemäßen Felgensystems. Die unterschiedlichen Adapterscheiben 14 weisen eine unterschiedliche Dicke auf und können dadurch unterschiedliche Einpresstiefen bzw. unterschiedliche Spurweiten realisieren, wenn die Felge 12 mit unterschiedlichen Adapterscheiben 14 an der Radnabe 16 montiert wird.

Darüber hinaus können die Adapterscheiben 14 unterschiedliche Lochkreise der Durchgangsöffnungen 58 aufweisen, durch die die Schrauben 20 gesteckt werden, um die Adapterscheibe 14 mit der Radnabe 16 zu verbinden. Die Durchgangsöffnungen 58 können erforderlichenfalls auch als Langlöcher, insbesondere gekrümmte Langlöcher, ausgebildet sein.

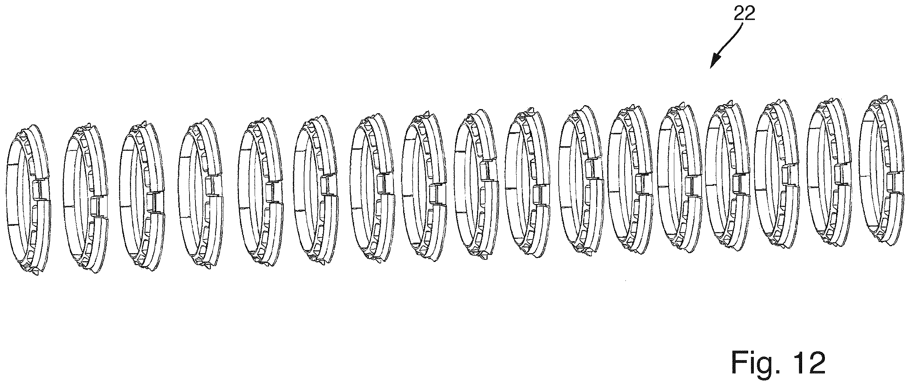

Fig. 12 zeigt einen Satz unterschiedlicher Radnabenzentrierringe 22 des erfindungsgemäßen Felgensystems. Die Radnabenzentrierringe 22 weisen jeweils einen unterschiedlichen Innenumfang ihrer Zentrierflächen auf, um auf unterschiedlich ausgebildeten Radnaben 16 montiert zu werden. Mittels der unterschiedlichen Radnabenzentrierringe 22 des in Fig. 12 dargestellten Satzes kann die Adapterscheibe 14 somit an unterschiedlichste Radnabenaußendurchmesser angepasst werden.

**Patentansprüche**

1. Felgensystem mit einer Felge (12), mit einer Adapterscheibe (14) zur Montage an einer Radnabe (16) eines Fahrzeugs, mit mehreren Radschrauben (14) oder mehreren Radmuttern zum Befestigen der Felge (12) an der Adapterscheibe (14), mit mehreren Schrauben (20) oder mehreren Muttern zum Befestigen der Adapterscheibe (14) an der Radnabe (16) und mit einem Radnabenzentrierring (22) zum Zentrieren der Adapterscheibe (14) relativ zur Radnabe (16), **dadurch gekennzeichnet, dass** ein Felgenzentrierring (24) zum Zentrieren der Felge (12) relativ zur Adapterscheibe (14) vorgesehen ist.

2. Felgensystem nach Anspruch 1, **dadurch gekennzeichnet, dass** der Felgenzentrierring (24) aus Kunststoff besteht.

3. Felgensystem nach Anspruch 1 oder 2, **dadurch gekennzeichnet, dass** eine Zentrierfläche (34) des Felgenzentrierrings (24) mehrere Noppen oder Vorsprünge (56) aufweist.

4. Felgensystem nach wenigstens einem der vorstehenden Ansprüche, **dadurch gekennzeichnet, dass** eine Zentrierfläche (34) des Felgenzentrierrings (24) leicht konisch ausgebildet ist.

5. Felgensystem nach wenigstens einem der vorstehenden Ansprüche, **dadurch gekennzeichnet, dass** der Felgenzentrierring (24) mit Rastmitteln an der Felge (12) befestigt ist, wobei insbesondere der Felgenzentrierring (24) wenigstens zwei Rastnasen (52) und die Felge (12) in einer Mittelöffnung (50) eine umlaufende Nut (54) aufweist, wobei die wenigstens zwei Rastnasen (52) zum Einrasten in die umlaufende Nut (54) vorgesehen sind.

6. Felgensystem nach wenigstens einem der vorstehenden Ansprüche, **dadurch gekennzeichnet, dass** eine Zentrierfläche (34) des Felgenzentrierrings (24) zum Zusammenwirken mit einem Innenumfang (36) einer Mittelöffnung der Adapterscheibe (14) ausgebildet ist.

7. Felgensystem nach wenigstens einem der vorstehenden Ansprüche, **dadurch gekennzeichnet, dass** die Adapterscheibe (14) mehrere Gewindebuchsen (30) zum Eindrehen der Radschrauben (14) oder mehrere Schraubbolzeneinsätze zum Aufschrauben der Radmuttern aufweist.

8. Felgensystem nach wenigstens einem der vorstehenden Ansprüche, **dadurch gekennzeichnet, dass** die Adapterscheibe (14) auf ihrer, der Felge (12) zugewandten Oberfläche wenigstens einen Vorsprung aufweist, wobei der Vorsprung zum Eingreifen in eine passende Ausnehmung in der Felge (12) vorgesehen ist.

9. Felgensystem nach Anspruch 7 und 8, **dadurch gekennzeichnet, dass** die Gewindebuchsen einen über die der Felge zugewandte Oberfläche der Adapterscheibe (14) hinausragenden Bund aufweisen, wobei der Bund den Vorsprung zum Eingreifen in eine passende Ausnehmung der Felge bildet.

10. Felgensystem nach wenigstens einem der vorstehenden Ansprüche, **dadurch gekennzeichnet, dass** der Radnabenzentrierring (22) eine Zentrierfläche aufweist die zum Zusammenwirken mit einem Außenumfang (44) der Radnabe (16) ausgebildet ist.

11. Felgensystem nach Anspruch 10, **dadurch gekennzeichnet, dass** die Zentrierfläche des Radnabenzentrierrings (22) mehrere Noppen oder Vorsprünge (48) aufweist.

12. Felgensystem nach Anspruch 10 oder 11, **dadurch gekennzeichnet, dass** die Zentrierfläche des Radnabenzentrierrings (22) leicht konisch ist.

13. Felgensystem nach wenigstens einem der vorstehenden Ansprüche, **dadurch gekennzeichnet, dass** der Radnabenzentrierring (22) Rastmittel zum Befestigen des Radnabenzentrierrings an der Adapterscheibe (14) aufweist.

14. Satz mit mehreren Adapterscheiben für ein Felgensystem nach wenigstens einem der vorstehenden Ansprüche 1 bis 13, **dadurch gekennzeichnet, dass** der Satz mehrere Adapterscheiben (14) aufweist, wobei die Adapterscheiben (14) des Satzes eine unterschiedliche Dicke und/oder unterschiedliche Lochkreise zur Verbindung mit der Radnabe (16) aufweisen.

15. Satz mit mehreren Radnabenzentrierringen für ein Felgensystem nach wenigstens einem der vorstehenden Ansprüche 1 bis 13, **dadurch gekennzeichnet, dass** der Satz mehrere Radnabenzentrierringe (22) aufweist, wobei die Radnabenzentrierringe (22) des Satzes einen unterschiedlichen Durchmesser der Zentrierfläche aufweisen.

16. Satz mit mehreren Felgenzentrierringen für ein Felgensystem nach wenigstens einem der vorstehenden Ansprüche 1 bis 13, **dadurch gekennzeichnet, dass** der Satz mehrere Felgenzentrierringe (24) aufweist, wobei die Felgenzentrierringe (24) des Satzes zum Zentrieren unterschiedlich ausgebildeter Felgen ausgebildet sind.

17. Anordnung mit einem Felgensystem (10) nach wenigstens einem der vorstehenden Ansprüche 1 bis 13 und einer Radnabe (16) eines Fahrzeugs, wobei die Adapterscheibe (14) mit mehreren Schrauben (20) oder mehreren Muttern an der Radnabe (16) befestigt ist, wobei ein Radnabenzentrierring (22) zum Zentrieren der Adapterscheibe (14) relativ zur Radnabe (16) vorgesehen ist, wobei die Felge (12) mit mehreren Radschrauben (18) oder mehreren Radmuttern an der Adapterscheibe (14) befestigt ist und wobei ein Felgenzentrierring (24) zum Zentrieren der Felge (12) relativ zur Adapterscheibe (14) vorgesehen ist.

**Claims**

1. Rim system having a rim (12), having an adapter disc (14) for mounting on a wheel hub (16) of a vehicle, having a plurality of wheel screws (14) or a plurality of wheel nuts for fastening the rim (12) to the adapter disc (14), having a plurality of screws (20) or a plurality of nuts for fastening the adapter disc (14) to the wheel hub (16) and having a wheel hub centring ring (22) for centring the adapter disc (14) relative to the wheel hub (16), **characterized in that** a rim centring ring (24) is provided for centring the rim (12) relative to the adapter disc (14).

2. Rim system according to Claim 1, **characterized in that** the rim centring ring (24) consists of plastic.

3. Rim system according to Claim 1 or 2, **characterized in that** a centring surface (34) of the rim centring ring (24) has a plurality of nubs or projections (56).

4. Rim system according to at least one of the preceding claims, **characterized in that** a centring surface (34) of the rim centring ring (24) is configured to be slightly conical.

5. Rim system according to at least one of the preceding claims, **characterized in that** the rim centring ring (24) is fastened to the rim (12) using latching means, wherein, in particular, the rim centring ring (24) has at least two latching lugs (52) and the rim (12) has a circumferential groove (54) in a central opening (50), wherein the at least two latching lugs (52) are provided for latching into the circumferential groove (54).

6. Rim system according to at least one of the preceding claims, **characterized in that** a centring surface (34) of the rim centring ring (24) is configured to interact with an inner circumference (36) of a central opening of the adapter disc (14).

7. Rim system according to at least one of the preceding claims, **characterized in that** the adapter disc (14) has a plurality of threaded bushes (30) for screwing in the wheel screws (14), or a plurality of screw bolt inserts for screwing on the wheel nuts.

8. Rim system according to at least one of the preceding claims, **characterized in that** the adapter disc (14) has at least one projection on its surface facing the rim (12), wherein the projection is provided for engaging in a suitable recess in the rim (12).

9. Rim system according to Claims 7 and 8, **characterized in that** the threaded bushes have a collar, which protrudes beyond the surface of the adapter disc (14) facing the rim, wherein the collar forms the projection for engaging in a suitable recess of the rim.

10. Rim system according to at least one of the preceding claims, **characterized in that** the wheel hub centring ring (22) has a centring surface, which is configured to interact with an outer circumference (44) of the wheel hub (16).

11. Rim system according to Claim 10, **characterized in that** the centring surface of the wheel hub centring ring (22) has a plurality of nubs or projections (48).

12. Rim system according to Claim 10 or 11, **characterized in that** the centring surface of the wheel hub centring ring (22) is slightly conical.

13. Rim system according to at least one of the preceding claims, **characterized in that** the wheel hub centring ring (22) has latching means for fastening the wheel hub centring ring to the adapter disc (14).

14. Set having a plurality of adapter discs for a rim system according to at least one of preceding Claims 1 to 13, **characterized in that** the set comprises a plurality of adapter discs (14), wherein the adapter discs (14) of the set have different thicknesses and/or different pitch circles for connecting to the wheel hub (16).

15. Set having a plurality of wheel hub centring rings for a rim system according to at least one of preceding Claims 1 to 13, **characterized in that** the set comprises a plurality of wheel hub centring rings (22), wherein the wheel hub centring rings (22) of the set have different centring surface diameters.

16. Set having a plurality of rim centring rings for a rim system according to at least one of preceding Claims 1 to 13, **characterized in that** the set comprises a plurality of rim centring rings (24), wherein the rim centring rings (24) of the set are configured to centre differently configured rims.

17. Assembly having a rim system (10) according to at least one of preceding Claims 1 to 13 and a wheel hub (16) of a vehicle, wherein the adapter disc (14) is fastened to the wheel hub (16) using a plurality of screws (20) or a plurality of nuts, wherein a wheel hub centring ring (22) is provided for centring the adapter disc (14) relative to the wheel hub (16), wherein the rim (12) is fastened to the adapter disc (14) using a plurality of wheel screws (18) or a plurality of wheel nuts, and wherein a rim centring ring (24) is provided for centring the rim (12) relative to the adapter disc (14).

**Revendications**

1. Système de jante comprenant une jante (12), un disque adaptateur (14) pour montage sur un moyeu de roue (16) d'un véhicule, plusieurs vis de roue (14) ou plusieurs écrous de roue pour fixer la jante (12) au disque adaptateur (14), plusieurs vis (20) ou plusieurs écrous pour fixer le disque adaptateur (14) au moyeu de roue (16) et un anneau (22) de centrage de moyeu de roue pour centrer le disque adaptateur (14) par rapport au moyeu de roue (16), **caractérisé en ce qu'**un anneau (24) de centrage de jante est prévu pour centrer la jante (12) par rapport au disque adaptateur (14).

2. Système de jante selon la revendication 1, **caractérisé en ce que** l'anneau (24) de centrage de jante est en matière plastique.

3. Système de jante selon la revendication 1 ou la revendication 2, **caractérisé en ce qu'**une surface de centrage (34) de l'anneau (24) de centrage de jante présente plusieurs plots ou protubérances (56).

4. Système de jante selon au moins l'une des revendications précédentes, **caractérisé en ce qu'**une surface de centrage (34) de l'anneau (24) de centrage de jante est légèrement conique.

5. Système de jante selon au moins l'une des revendications précédentes, **caractérisé en ce que** l'anneau (24) de centrage de jante est fixé à la jante (12) par des moyens d'encliquetage, l'anneau (24) de centrage de jante présentant notamment au moins deux ergots d'encliquetage (52) et la jante (12) présentant une rainure circonférentielle (54) dans une ouverture centrale (50), lesdits au moins deux ergots d'encliquetage (52) étant prévus pour s'encliqueter dans la rainure circonférentielle (54).

6. Système de jante selon au moins l'une des revendications précédentes, **caractérisé en ce qu'**une surface de centrage (34) de l'anneau (24) de centrage de jante est conçue de façon à coopérer avec une circonférence intérieure (36) d'une ouverture centrale du disque adaptateur (14).

7. Système de jante selon au moins l'une des revendications précédentes, **caractérisé en ce que** le disque adaptateur (14) présente une pluralité de douilles filetées (30) pour le vissage des vis de roue (14) ou une pluralité d'inserts de boulons pour le vissage des écrous de roue.

8. Système de jante selon au moins l'une des revendications précédentes, **caractérisé en ce que** le disque adaptateur (14) présente au moins une saillie sur sa surface tournée vers la jante (12), la saillie étant prévue pour s'engager dans un évidement adapté de la jante (12).

9. Système de jante selon les revendications 7 et 8, **caractérisé en ce que** les douilles filetées présentent un épaulement dépassant de la surface du disque adaptateur (14) tournée vers la jante, l'épaulement formant la saillie destinée à s'engager dans un évidement adapté de la jante.

10. Système de jante selon au moins l'une des revendications précédentes, **caractérisé en ce que** l'anneau (22) de centrage de moyeu de roue présente une surface de centrage qui est conçue de façon à coopérer avec une circonférence extérieure (44) du moyeu de roue (16).

11. Système de jante selon la revendication 10, **caractérisé en ce que** la surface de centrage de l'anneau (22) de centrage de moyeu de roue présente une pluralité de plots ou saillies (48).

12. Système de jantes selon la revendication 10 ou la revendication 11, **caractérisé en ce que** la surface de centrage de l'anneau (22) de centrage du moyeu de roue est légèrement conique.

13. Système de jante selon au moins l'une des revendications précédentes, **caractérisé en ce que** l'anneau (22) de centrage du moyeu de roue comprend des moyens d'encliquetage pour fixer l'anneau de centrage de moyeu de roue sur le disque adaptateur (14).

14. Ensemble comprenant une pluralité de disques adaptateurs pour un système de jante selon au moins l'une des revendications 1 à 13 ci-dessus, **caractérisé en ce que** l'ensemble comprend une pluralité de disques adaptateurs (14), les disques adaptateurs (14) de l'ensemble présentant une épaisseur différente et/ou des cercles de trous différents pour la liaison avec le moyeu de roue (16).

15. Ensemble comprenant une pluralité d'anneaux de centrage de moyeu de roue pour un système de jante selon au moins l'une des revendications 1 à 13 ci-dessus, **caractérisé en ce que** l'ensemble comprend une pluralité d'anneaux de centrage de moyeu de roue (22), les anneaux (22) de centrage de moyeu de roue de l'ensemble présentant un diamètre de surface de centrage différent.

16. Ensemble comprenant une pluralité d'anneaux de centrage de jante pour un système de jante selon au moins l'une des revendications 1 à 13 ci-dessus, **caractérisé en ce que** l'ensemble comprend plusieurs anneaux (24) de centrage de jante, les anneaux (24) de centrage de jante de l'ensemble étant configurés pour centrer des jantes de configurations différentes.

17. Agencement comprenant un système de jantes (10) selon au moins l'une des revendications 1 à 13 précédentes et un moyeu de roue (16) d'un véhicule, le disque adaptateur (14) étant fixé au moyeu de roue (16) par plusieurs vis (20) ou plusieurs écrous, un anneau (22) de centrage de moyeu de roue étant prévu pour centrer le disque adaptateur (14) par rapport au moyeu de roue (16), la jante (12) étant fixée au disque adaptateur (14) par plusieurs vis de roue (18) ou plusieurs écrous de roue, et un anneau (24) de centrage de jante étant prévu pour centrer la jante (12) par rapport au disque adaptateur (14).

Fig. 1

Fig. 2

Fig. 3

Fig. 4

Fig. 5

Fig. 6

30

64

Fig. 7

22

48

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0641677 B1